# EUROPÄISCHE PATENTSCHRIFT

(11) **EP 3 369 864 B1**
(45) Veröffentlichungstag und Bekanntmachung des Hinweises auf die Patenterteilung: **14.06.2023**
(21) Anmeldenummer: 18156250.5
(22) Anmeldetag: 12.02.2018
(51) Int. Cl.: E02D 7/18, E02D 13/06

(54) **VERFAHREN ZUM ERKENNEN VON HINDERNISSEN BEIM BETRIEB EINER VIBRATIONSRAMME**
METHOD OF DETECTING OBSTRUCTIONS DURING THE OPERATION OF A VIBRATION DRIVER
PROCÉDÉ DE DÉTECTION D'OBSTACLES LORS DU FONCTIONNEMENT D'UN VIBRATEUR DE BATTAGE

(30) Priorität: 27.02.2017 DE 102017001877
(43) Veröffentlichungstag der Anmeldung: 05.09.2018
(73) Patentinhaber: Liebherr-Werk Nenzing GmbH, 6710 Nenzing (AT)
(72) Erfinder: Jussel, Patrick, 6700 Bludenz (AT); Loster, Peter, 94360 Mitterfels (DE)
(74) Vertreter: Laufhütte, Dieter

(56) Entgegenhaltungen:
- EP-A1- 2 868 806
- DE-A1- 19 631 992
- DE-A1-102014 103 299
- GB-A- 1 439 455
- JP-A- H1 078 333
- JP-A- H05 179 646

## Beschreibung

Die Erfindung betrifft ein Verfahren zum Erkennen von Hindernissen beim Betrieb einer Vibrationsramme, eine entsprechende Vibrationsramme sowie eine Arbeitsmaschine mit einer Vibrationsramme.

Beim Eintreiben eines Rammgutes durch eine mäklergeführte Vibrationsramme, wobei der Mäkler direkt an einer Arbeitsmaschine angebracht ist, stellen Hindernisse wie Findlinge oder Felsformationen ein großes Problem dar, bei dem durch die Rücckopplung über das Rammgut (z.B. Spundwand), die Klemmzange, den Rüttler und anschließend der Mäkler Schaden an verschiedenen Maschinenteilen verursachen kann. Die genannten Komponenten können auch selbst beschädigt werden. Physikalisch kann dieser Prozess beschrieben werden als ein inelastischer Stoß, bei dem die Energie der Vibrationen sowie der Vortriebskraft nicht wie angedacht für den Vortrieb aufgebracht werden, sondern auf die Maschine rückübertragen werden.

Bisher gibt es kein zuverlässiges Warnsystem, das den Fahrer automatisiert und rechtzeitig vor einer entsprechenden Gefahr warnt. Um Schaden abzuwenden ist daher eine rasche Reaktion vom Fahrer notwendig, um rechtzeitig den Vortrieb zu unterbrechen.

In einer anderen Anwendung kann es notwendig sein, dass etwa ein Rammgut in einen Felsen derart eingetrieben wird, dass die Standfestigkeit gewährleistet ist. Der Fahrer rüttelt das Rohr so lange, bis das Rohr am Felsen ansteht, und übt noch so lange einen Druck auf den Pfahl aus, bis die Amplitude des Rüttlers maximal wird. Obwohl der Pfahl bereits lange auf dem Felsen ansteht, wird noch lange das System weiter belastet, bis die Maschine ansteht. Dauerhaft kann die Maschine dadurch sehr stark belastet werden.

Aus der DE 196 31 992 A1 ist eine Vibrationsramme bekannt, die dazu eingerichtet ist, zum Erkennen von Hindernissen die Beschleunigungswerte der Vibrationsramme zu erefassen und zu analysieren.

Ferner offenbart die JP H10 78 333 A ein System zur Analyse von Messungen an Rammpfählen, welches bei Arbeiten im Zusammenhang mit dem Rammen von Pfählen angewendet werden kann, um die Tragkraft sowie die Standsicherheit auf der Grundlage der Wellenlehre für jeden Pfahl zu ermitteln.

Zudem beschreibt die JP H05 179 646 A ein Analyseverfahren zur Bewertung, ob die Tragfähigkeit eines Fundaments, in das der untere Teil eines Pfahls eingelassen wurde, hinreichend dimensioniert ist oder nicht. Demnach wird der obere Teil des betreffenden Pfahls von einem Stoßkörper beaufschlagt, wobei die durch den Schlag verursachte Vibration des Pfahlkörpers mittels eines am oberen Teil des Pfahls befindlichen Vibrationssensors erfasst wird.

Aufgabe der Erfindung ist es, ein verbessertes Verfahren zum Erkennen von Hindernissen beim Betrieb einer Vibrationsramme bereitzustellen, mittels welcher ein schonenderer Betrieb möglich ist.

Diese Aufgabe wird durch ein Verfahren nach dem Anspruch 1 gelöst. Vorteilhafte Ausgestaltungen sind Gegenstand der abhängigen Ansprüche. Das erfindungsgemäße Verfahren weist die Schritte auf:
Erfassen von Beschleunigungssignalen der Vibrationsramme; und
Analysieren der Beschleunigungssignale über einen Zeitraum t, wobei die eigentliche Beschleunigung, die Geschwindigkeit und/oder der Weg als Signal betrachtet wird, und, wobei das Analysieren der Beschleunigungssignale das Vergleichen von negativen und positiven Halbwellen umfasst, und wobei aus diesen Halbwellen Maßzahlen wie etwa Fläche, Amplitude oder Form berechnet werden.

Die Halbwellen können die erfassten Beschleunigungssignale repräsentieren oder von den erfassten Beschleunigungssignalen abgeleitet sein. Ferner kann es sich bei den verglichenen Halbwellen um einander benachbarte Halbwellen handeln.

In einer bevorzugten Ausführung der Erfindung ist denkbar, dass das Analysieren das Bestimmen der Geschwindigkeit und/oder der Amplitude der Vibrationsramme umfasst. Die Geschwindigkeit und/oder die Amplitude können dabei durch Integration des Beschleunigungssignals bzw. der Beschleunigungssignale bestimmt werden. Auch die Frequenz der Vibrationsramme ist aus den Beschleunigungssignalen ermittelbar. Das erfasste Beschleunigungssignal kann dabei von einem Beschleunigungsmesser erfasst werden, der die Beschleunigung in wenigstens eine Richtung, insbesondere in Richtung des Rammfortschritts bestimmt.

In einer weiteren bevorzugten Ausführung ist es denkbar, dass die Beschleunigungssignale mittels des wenigstens einen Beschleunigungssensor bzw. einen Beschleunigungsmesser an der Vibrationsramme und/oder an einem mit der Vibrationsramme gekoppelten Mäkler und/oder Rammgut erfasst werden.

In einer weiteren bevorzugten Ausführung ist ferner denkbar, dass das Erfassen über einen einstellbaren Beobachtungszeitraum erfolgt, wobei der Beobachtungszeitraum insbesondere abhängig von der Erregerfrequenz gewählt werden kann. Die Erregerfrequenz kann hierbei die Frequenz der Vibrationsramme sein.

In einer weiteren bevorzugten Ausführung ist denkbar, dass das Vergleichen der negativen und positiven Halbwellen das Vergleichen von Messzahlen wie der Fläche, Amplitude und/oder Form umfasst, wobei die Form insbesondere die Halbwertsbreite der Halbwellen sein kann. Vorliegend kann selbstverständlich auch eine Mehrzahl von entsprechenden Vergleichen gemeint sein.

In einer weiteren bevorzugten Ausführung ist denkbar, dass das Analysieren das Suchen nach kritischen Frequenzen wie insbesondere Resonanzfrequenzen mittels einer Frequenzanalyse umfasst.

Ferner kann in einer weiteren bevorzugten Ausführung vorgesehen sein, dass das Analysieren die Analyse des Klirrfaktors umfasst.

In einer weiteren bevorzugten Ausführung ist ferner denkbar, dass das Verfahren das Ausgeben eines Signals in Abhängigkeit von dem Analysieren umfasst. Das ausgegebene Signal kann dabei eine Steuer- und/oder Anzeigesignal sein. Ein Steuersignal kann die Vibrationsramme bzw. eine mit ihr gekoppelte Einrichtung beispielsweise zum Schutz der Vibrationsramme ansteuern. Die Vibrationsramme kann dabei beispielsweise verlangsamt oder angehalten werden. Als Informationssignal kann beispielsweise eine Anzeige aufleuchten, die einer Bedienperson der Vibrationsramme anzeigt, dass verfahrensgemäß ein Hindernis erkannt wurde. Hierdurch wird es der Bedienperson entsprechend ermöglicht entsprechend auf das frühzeitig erkannte Hindernis zu reagieren. Selbstverständlich wird das Signal dann ausgegeben, wenn die Analyse ergibt, dass ein Hindernis erkannt wurde.

Die Vibrationsramme und/oder die Arbeitsmaschine können im Zusammenhang mit dem erfindungsgemäßen Verfahren genannte Merkmale umfassen. Auf eine Wiederholung hierzu wird verzichtet.

Weitere Einzelheiten und Vorteile der Erfindung sind anhand der Figuren aufgezeigt. Dabei zeigen:
- Figur 1:: Eine schematische Ansicht einer Arbeitsmaschine 5 beim Ausführen eines erfindungsgemäßen Verfahrens, und
- Figur 2:: Der zeitliche Verlauf eines analysierten Signals beim Betrieb einer Vibrationsramme.

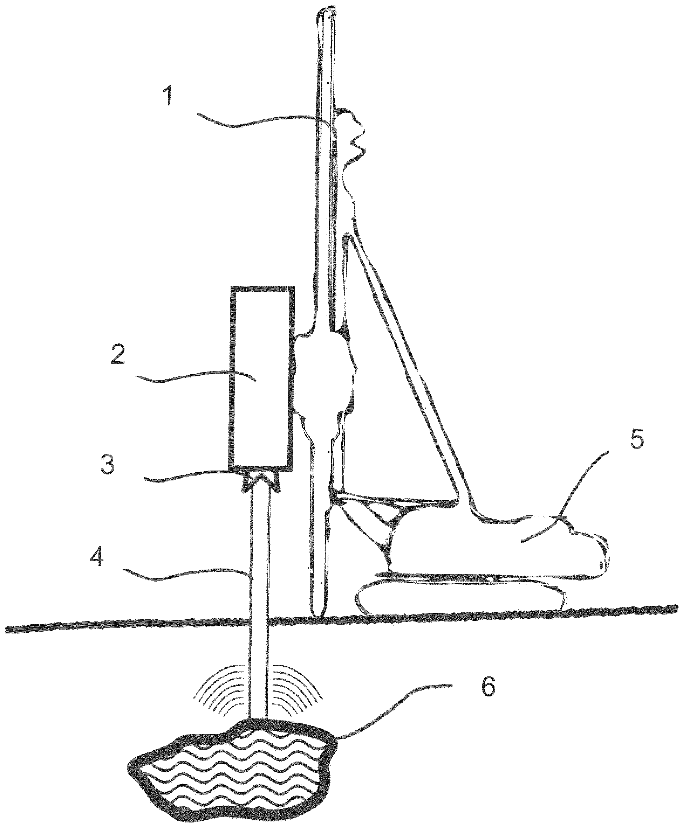

Eine an einem Mäkler 1 befestigte Vibrationsramme 2 überträgt gemäß Figur 1 Vibrationen mittels einer Klemmzange 3 an ein Rammgut 4, beispielsweise eine Spundwand, ein Rohr oder andere. Die Arbeitsmaschine 5 bzw. Trägermaschine 5 hat die Aufgabe den Mäkler zu halten, über eine Seilwinde oder ein anderes (etwa hydraulisches) System die Vibrationsramme mit einer Vorschubkraft Fv entlang des Mäklers nach unten zu drücken (oder nach oben zu ziehen, hierbei allerdings irrelevant), sowie die Vibrationsramme über das Hydrauliksystem anzusteuern. Beim Eintreiben kann das Rammgut auf ein Hindernis 6 stoßen, was zu Schaden beim Rüttler, Mäkler und/oder Trägermaschine führen kann.

Sowohl die Trägermaschine als auch die Vibrationsramme kann mit Sensorik ausgestattet sein, die folgende Messungen im laufenden Betrieb mit einer ausreichend gro-ßen Abtastrate (mind. 40 Hz) erlauben: die Vorschubkraft, die anregende Vibrationsfrequenz, die anregende Vibrationsamplitude, die Vorschubgeschwindigkeit und/oder die verschiedenen hydraulischen Messgrößen wie etwa Druck, Ölfördermengen etc.

Beim normalen Rüttelprozess wird das Rammgut in den Boden eingetrieben, wobei durch die Vorschubkraft das Bodenmaterial an der Rammgutspitze verdrängt wird und durch die Vibrationen Widerstand am Mantel und an der Spitze des Rammgutes reduziert wird. Trifft nun die Rammgutspitze auf ein massives Hindernis, das keine Verdrängung zulässt, dann findet anstatt der Verdrängung des Bodenmaterials an der Spitze ein inelastischer Stoß zwischen Rammgut und Hindernis statt. Die kinetische Energie kann in Form eines Schocks entlang des Rammgutes an den Rüttler übertragen werden.

Durch die Vibrationen des Rüttlers werden diese Schocks immer wieder erzeugt und breiten sich abhängig von der Länge des Rammgutes und der Schallgeschwindigkeit im Material des Rammgutes mit einer bestimmten Geschwindigkeit aus und wechselwirken in weiterer Folge mit dem Rüttler. Es kommt zu Störungen in der anregenden Bewegung des Rüttlers (so können etwa die anregenden Unwuchten gestört werden), es kommt zu Überlagerungen von verschiedenen Frequenzen, und in weiterer Folge entstehen zusätzliche, nieder- und hochfrequente Frequenzen im System Rüttler und Rammgut. Diese Frequenzen können mit der Eigenfrequenz der Trägermaschine oder des Mäklers übereinstimmen, es kann also in weiterer Folge zu gro-ßen Amplituden kommen, die zu Schäden an Rammgut, Rüttler, Mäkler oder Trägermaschine führen können.

Für die Erfindung kann ein bereits standardmäßig verbauter Sensor verwendet werden: ein Beschleunigungsmesser, der die Beschleunigung in mindestens eine Richtung (in Richtung Rammfortschritt) bestimmen kann. Durch Integration des Beschleunigungssignals kann des Weiteren Geschwindigkeit und Amplituden bestimmt werden, auch die Frequenz kann aus dem Beschleunigungssignal ermittelt werden. Der Beschleunigungssensor ist vorzugsweise am Rüttler befestigt, andere mögliche Positionen sind etwa am Mäkler oder direkt auf dem Rammgut.

Die Erfindung ermöglicht durch eine Analyse der Beschleunigungssignale eine Erkennung von Hindernissen im Boden. Das Beschleunigungssignal wird dabei über einen Zeitraum t betrachtet, folgende Signale können dabei für eine Erkennung eines Hindernisses verwendet werden: die eigentliche Beschleunigung, die Geschwindigkeit und/oder der Weg. Folgende Möglichkeiten bieten sich an:
Die schnellste Methode: Die positiven und negativen Halbwellen werden getrennt voneinander betrachtet und verglichen, wobei einzelne Halbwellen aber auch mehrere Halbwellen über einen einstellbaren Beobachtungszeitraum verwendet werden können. Der Beobachtungszeitraum kann beispielsweise abhängig von der Erregerfrequenz gewählt werden. Durch verschiedene Methoden können aus diesen Halbwellen Maßzahlen berechnet werden, wie etwa Fläche, Amplitude oder Form (etwa Halbwertsbreite). Ein Vergleich dieser beiden Maßzahlen bietet eine sehr rasche Erkennungseffizienz.
Eine weitere Methode besteht darin mittels einer Frequenzanalyse nach kritischen Frequenzen zu suchen, wie etwa Resonanzfrequenzen der Trägermaschine oder andere. Diese Frequenzen sind meist niedriger als die eigentliche Rüttelfrequenz und auch ein Hinweis auf einen härter werdenden Boden oder ein Hindernis. Für sich alleine ist diese Methode langsamer als die Methode 1, da der notwendige Beobachtungszeitraum größer sein muss. Allerdings kann alternativ auch diese Methode zu einer Erkennung führen, eine Kombination mit der ersten Methode ist denkbar.
Eine weitere Methode besteht in der Betrachtung des Klirrfaktors eines der folgenden Signale: Beschleunigung, Geschwindigkeit, Amplitude. Nach einer Tiefpassfilterung eines Signales sollte bei harmonischen Schwingungen nur noch eine Frequenz auftreten, ein ansteigender Klirrfaktor ist ein Hinweis auf inelastische Stöße und damit auf einen härter werdenden Boden oder Hindernis. Diese Methode ist vergleichbar mit der Methode 2. Für sich alleine ist diese Methode zu langsam, kann allerdings die Methode 1 unterstützen.
Für sich alleine ist die Amplitude von mehreren Faktoren abhängig: Anregende Frequenz und Amplitude, Gewicht des Rammgutes, Eindringtiefe und Mantelreibung. Aber ein kurzfristiger Anstieg ist trotz der vielen Abhängigkeiten ein möglicher, zusätzlicher Hinweis auf ein Hindernis.
Allgemein kann jede Abweichung von einer harmonischen Schwingung in Kombination mit mind. einer der oberen Methoden als ein Hinweis auf ein Hindernis verstanden werden.

Jede der obigen Methoden ermöglicht die Detektion eines Hindernisses mit einem einfachen Beschleunigungssensor und einer Auswerteeinheit, die erste Methode bietet aber die schnellste Erkennung. Das Analysieren der Beschleunigungssignale kann mittels wenigstens einer der Methoden erfolgen.

Erfindungsgemäß kann das Beschleunigungssignal mit wenigstens einer der Methoden analysiert werden und es kann festgestellt werden, dass ein Hindernis sich unmittelbar vor dem Rammgut befindet. In weiterer Folge wird der Fahrer gewarnt und/oder die Steuerung greift reglementierend in den weiteren Vortrieb ein (etwa Reduktion von Antriebskraft, Reduktion von Amplitude, etc.). Der schnellste und sicherste Ansatz entspricht der ersten Methode.

Vorteilhafterweise verbessern weitere Sensoren die Vorhersage: die anregenden Frequenzen des Rüttlers (beispielsweise Unwuchten) sind bekannt (Frequenz, Amplitude, Phase) und können mit dem Beschleunigungssignal abgeglichen werden; bei bekannten Materialeigenschaften des Rammgutes, bei bekannter Länge des Rammgutes und bei bekannter Eindringtiefe lassen sich die störenden Frequenzen modellieren; ein Hinweis auf stärkere Belastung gibt auch der Öldruck / Ölmenge, die der Rüttler für das Antreiben benötigt; Die Eigenfrequenzen von Rüttler, Mäkler und Trägermaschine sind bekannt, so kann etwa durch eine gezielte Suche nach genau diesen Frequenzen ein resonantes Verhalten besser erkannt werden; Eine Kombination einzelner oder aller der obigen vorteilhaften Methoden ergibt einen verbesserten Hinweis auf ein Hindernis.

In einer weiteren Ausführung kann nun je nach Einstellung auf solche Hindernisse wie folgt reagiert werden:
- Vorzeitige Reduktion der Unwuchtenverstellung zum Schutz des Rüttlers und Trägermaschine
- Vorzeitige Reduktion des Vortriebs zum Schutz von Rüttler und Trägermaschine
- Diese Art von Signal ist auch ein guter Indikator für die Festigkeit des Untergrundes, kann also etwa in Kombination mit weiteren Variablen (Anpressdruck, Frequenz, Amplitude) als Qualitätsmerkmal eines Pfahls angesehen werden. Dabei kann während des Eintreibens des Rammgutes gleichzeitig eine Sondierung des Bodens und der Bodenschichten für eine Dokumentation durchgeführt werden.
- Durch eine Aufzeichnung von Hindernissen lässt sich in weiterer Folge abschätzen, wie sich etwa die Lebensdauer eines Rüttlers durch Hindernisse verringert.

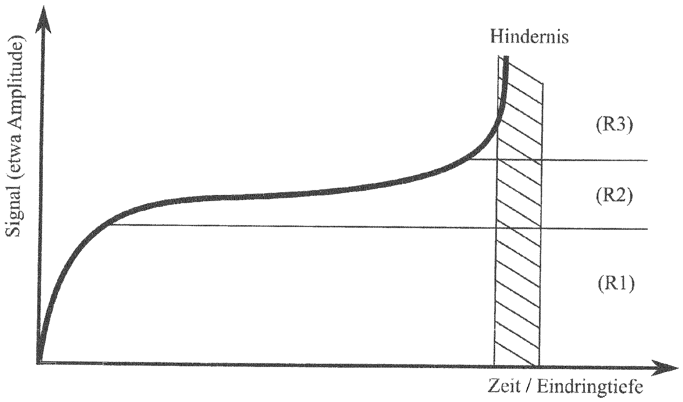

In Figur 2 ist der zeitliche Verlauf eines Signals beim Eintreiben einer Spundwand skizziert. Anfangs wird der Rüttler hochgefahren, das Signal überschreitet einen bestimmten Wert (Bereich R1) bereits nach kurzer Zeit. Beim weiteren Eindringen kann dieser Wert etwa durch Mantelreibung leicht zunehmen (Bereich R2). Die Spundwand stößt nach etwa 10m Tiefe während des Rüttelprozesses auf einen Findling. Bereits kurz davor ist aufgrund der Verdichtung durch den Rüttelprozess ein Anstieg der Amplitude festzustellen.

Der Anstieg der Amplitude während des weiteren Eintreibens lässt bereits auf ein Hindernis schließen (Bereich R3), entsprechend beginnt die Steuerung mit der Reduktion der Vibrationsamplitude und der Vorschubkraft, um vorzeitig Schaden an der Maschine zu verhindern. Beim direkten Kontakt mit dem Findling beginnt nun trotz reduzierter Amplitude durch inelastische Stöße die Amplitude im Rüttler anzuwachsen, eine Abschaltung der Maschine erfolgt. In weitere Folge müsste der Fahrer nun entscheiden, wie auf das Hindernis zu reagieren ist.

Beim Errichten von Pfählen gemäß einem anderen Anwendungsbeispiel sind diese beispielsweise auf einer Felsformation in 15 Meter Tiefe fest zu platzieren. In bisherigen Verfahren wurden die Pfähle bis zur gewünschten Tiefe eingerüttelt, dann so lange mit maximaler Vorschubkraft und großer Frequenz gerüttelt, bis der Öldruck zum Antrieb des Rüttlers einen bestimmten Wert überschritten hat. Das war der Hinweis für den Fahrer, dass der Pfahl auf einem ausreichend festen Boden platziert wird. Durch eine Hinderniserkennung kann bereits im Vorfeld der Fels als solcher erkannt werden, starke Abweichungen von der harmonischen Schwingung (durch beliebige mathematische Methoden) bieten die Möglichkeit die Festigkeit des Felsen ohne große Belastung an Rüttler und Trägermaschine zu erkennen.

## Patentansprüche

1. Verfahren zum Erkennen von Hindernissen mit wenigstens einem Beschleunigungssensor und einer Auswerteeinheit beim Betrieb einer Vibrationsramme (2), bei dem Beschleunigungssignale der Vibrationsramme (2) erfasst werden, **gekennzeichnet durch** die Schritte:
Analysieren der Beschleunigungssignale über einen Zeitraum t, wobei die eigentliche Beschleunigung, die Geschwindigkeit und/oder der Weg als Signal betrachtet wird, und wobei das Analysieren der Beschleunigungssignale das Vergleichen von negativen und positiven Halbwellen umfasst, und wobei aus diesen Halbwellen Maßzahlen wie etwa Fläche, Amplitude oder Form berechnet werden.

2. Verfahren nach Anspruch 1, **dadurch gekennzeichnet, dass** das Analysieren das Bestimmen der Geschwindigkeit und/oder der Amplitude der Vibrationsramme (2) umfasst.

3. Verfahren nach Anspruch 1 oder 2, **dadurch gekennzeichnet, dass** die Beschleunigungssignale mittels des wenigstens einen Beschleunigungssensors an der Vibrationsramme (2) und/oder an einem mit der Vibrationsramme (2) gekoppelten Mäkler (1) und/oder Rammgut (4) erfasst werden.

4. Verfahren nach einem der vorhergehenden Ansprüche, **dadurch gekennzeichnet, dass** das Erfassen über einen einstellbaren Beobachtungszeitraum erfolgt, wobei der Beobachtungszeitraum insbesondere abhängig von der Erregerfrequenz gewählt werden kann, wobei die Erregerfrequenz hierbei die Frequenz der Vibrationsramme (2) sein kann.

5. Verfahren nach einem der vorhergehenden Ansprüche, **dadurch gekennzeichnet, dass** das Vergleichen der negativen und positiven Halbwellen das Vergleichen von Messzahlen wie der Fläche, Amplitude und/oder Form umfasst, wobei die Form insbesondere die Halbwertsbreite der Halbwellen sein kann, wobei auch eine Mehrzahl von entsprechenden Vergleichen gemeint sein kann.

6. Verfahren nach einem der vorhergehenden Ansprüche, **dadurch gekennzeichnet, dass** das Analysieren das Suchen nach kritischen Frequenzen wie insbesondere Resonanzfrequenzen mittels einer Frequenzanalyse umfasst.

7. Verfahren nach einem der vorhergehenden Ansprüche, **dadurch gekennzeichnet, dass** das Analysieren die Analyse des Klirrfaktors umfasst.

8. Verfahren nach einem der vorhergehenden Ansprüche, **dadurch gekennzeichnet, dass** das Verfahren das Ausgeben eines Signals in Abhängigkeit von den Analyseergebnissen umfasst.

## Claims

1. A method of recognizing obstacles by at least one acceleraction sensor and an evaluation unit on operation of a vibratory pile driver (2) in which acceleration signals of the vibratory pile driver (2) are detected, **characterized by** the steps:
analyzing the acceleration signals over a time period t, with the actual acceleration, the speed and/or the distance being considered as the signal, with the analyzing of the acceleration signals comprising the comparison of negative and positive half-waves, and with measured values such as the area, amplitude, or shape being calculated from said half-waves.

2. A method in accordance with claim 1, **characterized in that** the analyzing comprises the deter'99mination of the speed and/or of the amplitude of the vibratory pile driver (2).

3. A method in accordance with claim 1 or claim 2, **characterized in that** the acceleration signals are detected by means of at least one acceleration sensor at the vibratory pile driver (2) and/or at a leader (1) and/or driving element (4) coupled to the vibratory pile driver (2).

4. A method in accordance with one of the preceding claims, **characterized in that** the detection takes place via an adjustable observation time period, with the observation time period in particular being able to be selected in dependence on the excitation frequency and with the excitation frequency here being able to be the frequency of the vibratory pile driver (2).

5. A method in accordance with one of the preceding claims, **characterized in that** the comparison of the negative and positive half-waves comprises the comparison of measured values such as the area, amplitude and/or shape, with the shape in particular being able to be the full width at half maximum of the halve-waves, with a plurality of corresponding comparisons also being able to be meant.

6. A method in accordance with one of the preceding claims, **characterized in that** the analyzing comprises the looking for critical frequencies such as in particular resonant frequencies by means of a frequency analysis.

7. A method in accordance with one of the preceding claims, **characterized in that** the analyzing comprises the analysis of the harmonic factor.

8. A method in accordance with one of the preceding claims, **characterized in that** the method comprises the outputting of a signal in dependence on the analysis results.

## Revendications

1. Procédé de détection d'obstacles avec au moins un capteur d'accélération et une unité d'évaluation lors du fonctionnement d'un vibrateur de battage (2), dans lequel des signaux d'accélération du vibrateur de battage (2) sont détectés, **caractérisé par** les étapes consistant à :
analyser les signaux d'accélération sur une période t, l'accélération réelle, la vitesse et/ou la course étant considérées comme signal et l'analyse des signaux d'accélération comprenant la comparaison de demi-ondes négatives et positives, et des valeurs numériques telles que, par exemple, la surface, l'amplitude ou la forme étant calculées à partir de ces demi-ondes.

2. Procédé selon la revendication 1, **caractérisé en ce que** l'analyse comprend la détermination de la vitesse et/ou de l'amplitude du vibrateur de battage (2).

3. Procédé selon la revendication 1 ou 2, **caractérisé en ce que** les signaux d'accélération sont détectés, au moyen de l'au moins un capteur d'accélération, sur le vibrateur de battage (2) et/ou sur une jumelle (1) accouplée au vibrateur de battage (2) et/ou sur du matériel à enfoncer par battage (4).

4. Procédé selon l'une des revendications précédentes, **caractérisé en ce que** la détection s'effectue sur une période d'observation réglable, la période d'observation pouvant en particulier être choisie en fonction de la fréquence d'excitation, la fréquence d'excitation pouvant alors être la fréquence du vibrateur de battage (2).

5. Procédé selon l'une des revendications précédentes, **caractérisé en ce que** la comparaison des demi-ondes négatives et positives comprend la comparaison de valeurs numériques telles que la surface, l'amplitude et/ou la forme, la forme pouvant en particulier être la largeur à mi-hauteur des demi-ondes, étant entendu qu'il peut aussi s'agir d'une pluralité de comparaisons correspondantes.

6. Procédé selon l'une des revendications précédentes, **caractérisé en ce que** l'analyse comprend la recherche de fréquences critiques, telles qu'en particulier des fréquences de résonance, au moyen d'une analyse de fréquences.

7. Procédé selon l'une des revendications précédentes, **caractérisé en ce que** l'analyse comprend l'analyse du facteur de distorsion.

8. Procédé selon l'une des revendications précédentes, **caractérisé en ce que** le procédé comprend l'émission d'un signal en fonction des résultats d'analyse.
